# EUROPÄISCHE PATENTSCHRIFT

(11) **EP 1 827 918 B1**
(45) Veröffentlichungstag und Bekanntmachung des Hinweises auf die Patenterteilung: **18.02.2009**
(21) Anmeldenummer: 04804224.6
(22) Anmeldetag: 22.12.2004
(51) Int. Cl.: B60R 21/20, F16B 2/00

(54) **KLEMMRING ZUR BEFESTIGUNG EINER GASGENERATORPATRONE**
CLAMPING RING FOR FASTENING A GAS GENERATING CARTRIDGE
ANNEAU DE SERRAGE POUR FIXER UNE CARTOUCHE GENERATRICE DE GAZ

(43) Veröffentlichungstag der Anmeldung: 05.09.2007
(73) Patentinhaber: Hans Oetiker AG Maschinen- und Apparatefabrik, 8812 Horgen (CH)
(72) Erfinder: MEIER, Ulrich, CH-8820 Wädenswil (CH); BERLEP, Thomas, 79346 Endingen a.K. (DE)
(74) Vertreter: Strehl Schübel-Hopf & Partner
(86) Internationale Anmeldenummer: PCT/EP2004/014629
(87) Internationale Veröffentlichungsnummer: WO 2006/074671

(56) Entgegenhaltungen:
- EP-A- 0 499 819
- EP-A- 1 245 891
- DE-A1- 10 329 008
- DE-U1- 20 301 398
- DE-U1- 20 306 587
- GB-A- 2 101 195
- US-A- 5 305 499

## Beschreibung

### Stand der Technik

Gasgeneratorpatronen für Kraftfahrzeug-Airbags, speziell für solche, die zum Rückhalten des Kopfes dienen sollen, werden häufig mit zwei Klemmringen an einer Halteplatte befestigt, die ihrerseits an der Karosserie montiert wird. Wegen der bei Auslösen der Patrone auftretenden erheblichen Kräfte wird gefordert, dass die Patrone in ihrer Befestigung an der Halteplatte einem Verdrehmoment von mindestens 10 Nm standhält.

Mit Schraubklemmen lässt sich diese Forderung erfüllen. Schraubklemmen sind aber in der Herstellung teuer und vor allem in der Montage zeitaufwändig, zumal darauf geachtet werden muss, dass die Schrauben mit einem vorgegebenen Drehmoment angezogen werden, um die erforderliche Haltekraft zu gewährleisten. Außerdem hat sich gezeigt, dass bei Schraubklemmen im Lauf der Zeit die für ein sicheres Halten der Gasgeneratorpatrone wesentliche Elastizität nachlässt.

Versuche mit stufenlosen Ohrklemmen, wie sie aus US 5,305,499 bekannt sind, haben gezeigt, dass bei direkter Abbindung der Metallpatrone mit der Metallklemme auch bei ausreichend schwerer Ausführung der Klemme ein Verdrehmoment von nur etwa 3,5 Nm erreicht wird. Beim Einsatz einer zusätzlichen Gummi- oder Kunststoffeinlage wurden Verdrehmomente bis etwa 9 Nm erzielt. Stufenlose Ohrklemmen mit integrierter wellenförmiger Elastizitätsreserve, wie sie in WO 02/077509 A1 beschrieben sind, führten bei Metall/Metall-Abbindung zu Werten von 5 bis 6 Nm.

Aus DE 103 29 008 A1 ist ein Klemmring mit den im Oberbegriff des Anspruchs 1 angegebenen Merkmalen bekannt, bei dem es sich um eine aus Bandmaterial hergestellte offene Ohrklemme für Gasgeneratorpatronen handelt, die zur Verbesserung ihrer Elastizität mit einzelnen nach außen gewölbten Wellen versehen ist. Zur Erhöhung der Haltekraft ist hier die Innenfläche des Klemmrings aufgeraut.

### Darlegung der Erfindung

Der Erfindung liegt die Aufgabe zugrunde, die bei vergleichbaren Klemmringen nach dem Stand der Technik auftretenden Nachteile mindestens teilweise zu vermeiden. Eine speziellere Aufgabe kann darin gesehen werden, einen Klemmring insbesondere zur Befestigung von Gasgeneratorpatronen zu schaffen, der bei möglichst einfacher Montage eines hohes Verdrehmoment gewährleistet.

Die Lösung dieser Aufgabe gelingt mit dem in Anspruch 1 gekennzeichneten Klemmring: Die danach vorgesehene Gestaltung des Klemmringprofils ergibt eine überraschend hohe Haltekraft, die durch das elastische Zusammenspiel zwischen dem Spannohr und der Welle sowie durch den Druck bedingt sein dürfte, mit dem die zwischen den beiden Auswölbungen der Welle liegende, nach innen konvexe Einwölbung an dem befestigten Gegenstand, der Gasgeneratorpatrone, angreift. Die oben beschriebenen Versuche haben gezeigt, dass der erfindungsgemäße Klemmring bei unmittelbarer Metall/Metall-Anlage Verdrehmomenten bis zu 13 Nm standhält. Gleichzeitig weist der Klemmring, der lediglich durch Verengen des Ohrs gespannt wird, den Vorteil einfacher Montierbarkeit auf.

Die Weiterbildung der Erfindung nach Anspruch 2 ist zur Erzielung einer geeigneten Elastizität und eines definierten Anpressdrucks zwischen der Einwölbung und der Patrone, die Gestaltung nach Anspruch 3 für die elastische Wechselwirkung zwischen der eingeformten Welle und dem Spannohr von Vorteil.

Die Maßnahme des Anspruchs 4 ergibt einen formstabilen und einfach zu fertigenden Klemmring.

Die in den Ansprüchen 5 bis 8 angegebenen Maßangaben haben sich für Klemmringe zur Befestigung üblicher Gasgeneratorpatronen als günstig erwiesen.

Die Gestaltung des Spannohrs nach Anspruch 9 ist für dessen Haltekraft zweckmäßig.

Die Ansprüche 10 und 11 beziehen sich auf eine für die Haltekraft und Sicherheit der Befestigung günstige Einbindung eines Teils der die Gasgeneratorpatrone tragenden Halteplatte in den Klemmring.

### Kurzbeschreibung der Zeichnung

Ein Ausführungsbeispiel der Erfindung wird nachstehend anhand der Zeichnung näher erläutert. In der Zeichnung zeigt
- Fig. 1: einen vergrößert dargestellten Klemmring im Profil,
- Fig. 2: eine mit zwei Klemmringen nach Fig. 1 an einer Halteplatte befestigte Gasgeneratorpatrone in Seitenansicht und
- Fig. 3: eine von rechts gesehene Stirnansicht der Anordnung nach Figur 2.

### Detaillierte Beschreibung eines Ausführungsbeispiels

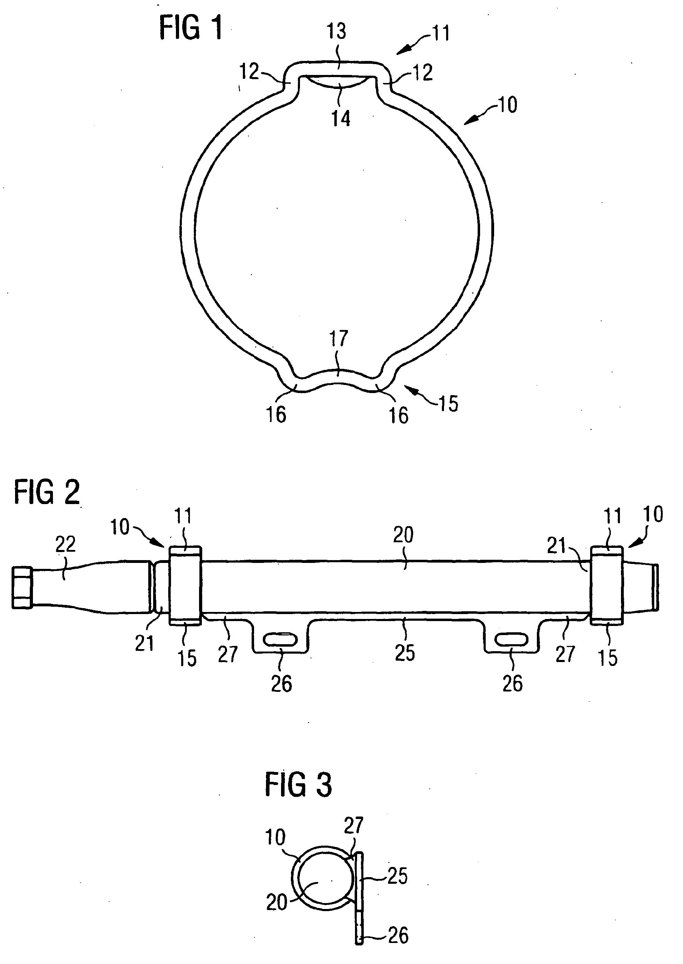

Der in Fig. 1 gezeigte geschlossene Klemmring 10 besteht aus einem in Axialrichtung 10 mm bereiten Abschnitt eines Rohrs aus verzinktem Stahl mit einer Wandstärke von 1,5 mm und hat in dem gezeigten nicht gespannten Zustand einen Innendurchmesser von 28,5 mm.

Um den Klemmring **10** um einen zu befestigenden (in Fig. 1 nicht gezeigten) Gegenstand zu spannen, weist er ein sogenanntes "Oetiker-Ohr" **11** auf, das zwei nach außen weisende Schenkel **12** und einen diese verbindenden Steg **13** umfasst. In den Steg **13** ist eine Versteifungssicke **14** eingeprägt. Der innere Abstand zwischen den im nicht gespannten Zustand parallelen Schenkeln **12** beträgt in dem gezeigten Ausführungsbeispiel 8 mm. Zum Spannen wird dieses Ohr **11** mit Hilfe eines zangenartigen Spezialwerkzeugs, dessen Backen nahe den inneren Enden der Schenkel **12** angreifen, in einem vorbestimmten Maß verengt.

Diametral gegenüber dem Ohr **11** ist in den Klemmring **10** eine insgesamt mit **15** bezeichnete Welle eingeformt, die zwei von dem Ring **10** nach außen vorspringende konvexe Auswölbungen **16** und dazwischen eine nach innen konvexe Einwölbung **17** umfasst. Die Auswölbungen **16** ragen um 2 bis 3 mm aus dem unverformten Ring heraus. Die radiale Länge der gesamten Welle **15** entspricht etwa der Breite des Ohrs **11** im nicht gespannten Zustand.

Die Einwölbung **17** ist so dimensioniert, dass ihr Scheitel mindestens den von den übrigen Teilen des Rings definierten inneren Kreisbogen tangiert. Zur Erhöhung der Klemmwirkung kann die Einwölbung **17** so gestaltet sein, daß ihr Scheitel im Ausgangszustand über den genannten Kreisbogen etwas nach innen ragt. Der Radius der Einwölbung **17** ist wesentlich größer als der der Auswölbungen **16,** so dass diese verhältnismäßig starr sind, während die Einwölbung **17** mit entsprechend höherer Elastizität an dem umspannten Gegenstand angreift.

Gemäß Fig. 2 und 3 ist eine schematisch angedeutete Gasgeneratorpatrone **20** für einen Kraftfahrzeug-Airbag nahe ihrer beiden zylindrischen Enden **21** jeweils mit einem Klemmring **10** gemäß Fig. 1 an einer Halteplatte **25** befestigt. An dem gemäß Fig. 2 linken Ende ist die Patrone **20** mit einem Anschlussnippel **22** zur Verbindung mit einem (nicht gezeigten) Airbag versehen. Die Halteplatte **25** weist seitliche Laschen **26** zur Montage an einer Kraftfahrzeugkarosserie auf.

Wie aus Fig. 3 ersichtlich, sind die beiden Endbereiche **27** der Halteplatte **25** entsprechend dem Außendurchmesser der zylindrischen Enden **21** der Patrone **20** über einen Bogen von etwa 120° gewölbt und kommen im fertig montierten Zustand zwischen der Patrone **20** und dem jeweiligen Klemmring **10** zu liegen.

Zur Befestigung an der Halteplatte **25** wird die Gasgeneratorpatrone **20** mit ihren zylindrischen Enden **21** in die vorgewölbten Endbereiche **27** der Halteplatte **25** eingelegt, woraufhin die Klemmringe **10** aufgeschoben werden. Durch Verengen der Klemmring-Ohren **11** mittels eines auf vorgegebene Kraft oder vorgegebenen Weg eingestellten Zangenwerkzeugs lassen sich die metallische Patrone **20** und die metallische Halteplatte **25** unmittelbar in den metallischen Klemmring **10** derart einspannen, dass ein Verdrehmoment zwischen Patrone **20** und Halteplatte 25 deutlich über dem geforderten Wert von 10 Nm erreicht wird.

Die in der obigen Beschreibung angegebenen Maßangaben beziehen sich auf das bevorzugte Ausführungsbeispiel, bei dem eine Gasgeneratorpatrone 20 mit zylindrischen Enden **21** eines bestimmten Außendurchmessers (etwa 27 mm) befestigt werden soll. Bei anders dimensionierten Gegenständen wäre der Klemmring, gegebenenfalls auch hinsichtlich seiner Wandstärke und axialen Breite, entsprechend anders zu bemessen.

## Patentansprüche

1. Klemmring zur Befestigung eines Gegenstands an einem Halter, insbesondere einer Airbag-Gasgeneratorpatrone **(20)** an einer Halteplatte **(25),** mit einem in den Ring eingeformten Spannohr **(11),** das zwei nach außen weisende Schenkel **(12)** und einen diese verbindenden Steg **(13)** aufweist, und einer die Haltekraft zwischen dem Ring **(10)** und dem Gegenstand erhöhenden Anordnung **(15), dadurch gekennzeichnet, dass** die die Haltekraft erhöhende Anordnung eine in den Ring **(10)** eingeformte Welle **(15)** enthält, die zwei von dem Ring nach außen vorspringende konvexe Auswölbungen **(16)** und dazwischen eine nach innen konvexe Einwölbung **(17)** umfasst, deren Scheitel im wesentlichen auf dem von den übrigen Teilen des Rings **(10)** definierten Kreisbogen liegt.

2. Klemmring nach Anspruch 1, wobei die Einwölbung **(17)** einen größeren Radius hat als die Auswölbungen **(16).**

3. Klemmring nach Anspruch 1 oder 2, wobei die Welle **(15)** dem Spannohr (11) diametral gegenüber liegt.

4. Klemmring nach einem der vorhergehenden Ansprüche, der aus Rohrmaterial gebildet ist.

5. Klemmring nach Anspruch 4, wobei das Rohrmaterial eine Wandstärke von 1 bis 2 mm, vorzugsweise 1,5 mm, hat.

6. Klemmring nach einem der vorhergehenden Ansprüche mit einer axialen Breite von 8 bis 15 mm, vorzugsweise 10 mm.

7. Klemmring nach einem der vorhergehenden Ansprüche, wobei die Auswölbungen **(16)** eine maximale Höhe von 2 bis 3 mm gegenüber dem unverformten Ring **(10)** haben.

8. Klemmring nach einem der vorhergehenden Ansprüche, wobei die Auswölbungen **(16)** bei einem Ring-Innendurchmesser im Bereich von 25 bis 35 mm einen gegenseitigen Abstand von 8 bis 12 mm haben.

9. Klemmring nach einem der vorhergehenden Ansprüche mit einer in den Steg **(13)** des Spannohrs **(11)** eingeprägten Versteifungssicke **(14).**

10. Halterung für eine Airbag-Gasgeneratorpatrone **(20)** mit einem Klemmring **(10)** nach einem der vorhergehenden Ansprüche und einer Halteplatte **(25),** wobei die Halteplatte **(25)** einen einem zylindrischen Bereich **(21)** der Patrone **(20)** entsprechend gewölbten Abschnitt **(27)** aufweist und der Klemmring **(10)** die Patrone **(20)** und die Halteplatte **(25)** in diesem Bereich umgreift.

11. Halterung nach Anspruch 10, wobei der gewölbte Abschnitt **(27)** der Halteplatte **(25)** die Patrone **(20)** in einem Bogen von 90° bis 150°, vorzugsweise 120°, umgibt.

## Claims

1. A clamping ring for mounting an object on a support, particularly an air bag gas generator cartridge **(20)** on a support plate **(25),** including a tensioning ear **(11)** formed in the ring and having two outward extending legs **(12)** interconnected by a web **(13),** and an arrangement **(15)** for increasing the holding force between the ring **(10)** and the object, **characterised in that** the arrangement for increasing the holding force includes a wave **(15)** formed in the ring **(10),** the wave having two convex arches **(16)** projecting outward from the ring and an inward convex arch **(17)** therebetween, the apex of the inward arch being situated substantially on the circle defined by the remaining portions of the ring **(10).**

2. The clamping ring of claim 1, wherein the inward arch **(17)** has a larger radius than the outward arches **(16).**

3. The clamping ring of claim 1 or 2, wherein the wave **(15)** is positioned diametrically opposite the tensioning ear **(11).**

4. The clamping ring of any preceding claim, which is made of tubular material.

5. The clamping ring of claim 4, wherein the tubular material has a wall thickness of 1 to 2 mm, preferably 1.5 mm.

6. The clamping ring of any preceding claim having an axial width of 8 to 15 mm, preferably 10 mm.

7. The clamping ring of any preceding claim, wherein the outward arches **(16)** have a maximum height of 2 to 3 mm with respect to the undeformed ring **(10).**

8. The clamping ring of of any preceding claim, wherein the outward arches **(16)** are mutually spaced 8 to 12 mm for an inner ring diameter in the range from 25 to 35 mm.

9. The clamping ring of any preceding claim having a reinforcing bead **(14)** stamped into the web **(13)** of the tensioning **ear (11).**

10. A support for an airbag gas generator cartridge **(20)** comprising a clamping ring **(10)** according to any preceding claim and a support plate **(25),** wherein the support plate **(25)** has a portion **(27)** curved corresponding to a cylindrical portion **(21)** of the cartridge **(20),** the clamping ring **(10)** surrounding the cartridge **(20)** and the support plate **(25)** in this area.

11. The support of claim 10, wherein the curved portion **(27)** of the support plate **(25)** surrounds the cartridge **(20)** through an arc of 90° to 150°, preferably 120°.

## Revendications

1. Bague de serrage pour la fixation d'un objet sur un support, en particulier d'une cartouche de génération de gaz (20) pour coussin gonflable sur une platine (25), avec un tube de serrage (11) formé dans la bague, lequel présente deux branches (12) dirigées vers l'extérieur et un pontet (13) reliant celles-ci, et avec un dispositif (15) augmentant la force de maintien entre la bague (10) et l'objet, **caractérisée en ce que** le dispositif augmentant la force de maintien contient un arbre (15) formé dans la bague qui comprend deux bossages convexes (16) faisant saillie vers l'extérieur de la bague et entre eux un creux (17) convexe vers l'intérieur dont le sommet se situe sensiblement sur l'arc de cercle défini par les autres parties de la bague (10).

2. Bague de serrage selon la revendication 1, dans laquelle le creux (17) présente un plus grand rayon que les bossages (16).

3. Bague de serrage selon la revendication 1 ou 2, dans laquelle l'arbre (15) est diamétralement opposé au tube de serrage (11).

4. Bague de serrage selon l'une quelconque des revendications précédentes qui est formée dans un matériau pour tube.

5. Bague de serrage selon la revendication 4, dans laquelle le matériau pour tube présente une épaisseur de paroi de 1 à 2 mm, de préférence de 1,5 mm.

6. Bague de serrage selon l'une quelconque des revendications précédentes avec une largeur axiale de 8 à 15 mm, de préférence de 10 mm.

7. Bague de serrage selon l'une quelconque des revendications précédentes, dans laquelle les bossages (16) ont une hauteur maximale de 2 à 3 mm par rapport à la bague (10) non déformée.

8. Bague de serrage selon l'une quelconque des revendications précédentes, dans laquelle les bossages (16) présentent un écartement de 8 à 12 mm, pour un diamètre intérieur de bague compris entre 25 et 35 mm.

9. Bague de serrage selon l'une quelconque des revendications précédentes avec une moulure de renfort (14) marquée à l'intérieur du pontet (13) du tube de serrage (11).

10. Fixation pour une cartouche de génération de gaz (20) pour coussin gonflable avec une bague de serrage (10) selon l'une quelconque des revendications précédentes et une platine (25), la platine (25) présentant un segment bombé (27) conformément à une zone cylindrique (21) de la cartouche (20), et la bague de serrage (10) entourant la cartouche (20) et la platine (25) dans cette zone.

11. Fixation selon la revendication 10, dans laquelle le segment bombé (27) de la platine (25) entoure la cartouche (20) sur un arc compris entre 90° et 150°, de préférence égal à 120°.
